# EUROPEAN PATENT APPLICATION

(11) **EP 4 843 873 A1**
(43) Date of publication of application: **25.11.2026**
(21) Application number: 25869609.5
(22) Date of filing: 15.07.2025
(51) Int. Cl.: B62D 55/065, E04H 4/16

(54) **UNDERWATER ROBOT DRIVING STRUCTURE AND UNDERWATER ROBOT**

(30) Priority: 03.04.2025 CN 202520623035 U
(71) Applicant: Shenzhen Seauto Technology Co., Ltd, Shenzhen, Guangdong 518000 (CN)
(72) Inventor: MO, Hansheng, Laibin, Guangxi 545800 (CN)
(74) Representative: Valet Patent Services Limited
(86) International application number: PCT/CN2025/108690
(87) International publication number: WO 2026/208041

(57) **Abstract**

The present invention discloses an underwater robot drive structure, including: a motor drive mechanism, a front wheel, a rear wheel, and a track; where the track is wound around the front wheel and the rear wheel, and the motor drive mechanism is configured to drive the front wheel and the rear wheel to move synchronously, thereby driving the track to move. Compared with the prior art, the present invention adopts a scheme of driving the track to move via the front wheel and the rear wheel, which is configured to effectively reduce the load on the track, thereby avoiding fracture, improving its service life, increasing transmission efficiency to save costs, and improving the cleaning effectiveness of the underwater robot.

## Description

### TECHNICAL FIELD

The present invention relates to the technical field of underwater robots, and in particular, to an underwater robot drive structure and an underwater robot.

### BACKGROUND

With the development of the social economy, the demand for swimming pool cleaning is increasing, and swimming pool cleaning robots are required to clean up debris in complex underwater environments. As there may be slopes and protrusions on the bottom of the swimming pool, four-wheel robots are prone to slipping, and walking with tracks can reduce slipping. Current track solutions on the market typically mesh the track onto front and rear wheels, where a drive motor drives one wheel, and the track drives the other wheel to achieve walking. However, in this design, the track serves both the walking function and the transmission mechanism, requiring a certain preload to be installed, which increases the motor load, and the track is prone to aging and fracture under long-term preload tension.

### SUMMARY

A primary objective of the present invention is to propose an underwater robot structure and an underwater robot, aiming to improve track lifespan, increase transmission efficiency to save costs, and improve cleaning effectiveness.

To achieve the aforementioned objective, the present invention provides an underwater robot structure including: a motor drive mechanism, a front wheel, a rear wheel, and a track; where the track is wound around the front wheel and the rear wheel, and the motor drive mechanism is configured to drive the front wheel and the rear wheel to move synchronously, thereby driving the track to move.

A further technical solution of the present invention is that the motor drive mechanism includes a motor and a gear transmission set; an output shaft of the motor is connected to an input end of the gear transmission set; and the gear transmission set is respectively meshed with the front wheel and the rear wheel.

A further technical solution of the present invention is that the gear transmission set includes a front gear transmission unit, a rear gear transmission unit, and an interconnecting gear; the front gear transmission unit includes a first gear and a second gear coaxially connected to the first gear; the rear gear transmission unit includes a third gear and a fourth gear coaxially connected to the third gear; the second gear is connected to the output shaft of the motor; the interconnecting gear is respectively meshed with the second gear and the third gear; each of the front wheel and the rear wheel is provided with an internal ring gear; the internal ring gear of the front wheel is meshed with the first gear; and the internal ring gear of the rear wheel is meshed with the fourth gear.

A further technical solution of the present invention is that the underwater robot drive structure further includes a roller brush drive gear set driven in conjunction with the second gear.

A further technical solution of the present invention is that the roller brush drive gear set includes a roller brush intermediate gear and a roller brush gear; the roller brush intermediate gear is meshed with the second gear; the roller brush gear is meshed with the roller brush intermediate gear; and the roller brush gear is connected to a roller brush.

To achieve the aforementioned objective, the present invention further proposes an underwater robot, where the underwater robot includes the underwater robot drive structure described above.

A further technical solution of the present invention is that the underwater robot further includes a pressure hull, a debris bin, and a debris bin cover; the debris bin is disposed at a rear end of the pressure hull; and the debris bin cover covers an upper end of the debris bin.

A further technical solution of the present invention is that the underwater robot further includes a paddle disposed on a top of the pressure hull.

A further technical solution of the present invention is that the underwater robot further includes a switch button, a charging socket, and an indicator light disposed on the pressure hull.

A further technical solution of the present invention is that the underwater robot further includes a printed circuit board, PCB, disposed inside the pressure hull, and the switch button, the charging socket, and the indicator light are electrically connected to the PCB.

The beneficial effects of the underwater robot drive structure and the underwater robot of the present invention are as follows:

With the above technical solution of the present invention, including: a motor drive mechanism, a front wheel, a rear wheel, and a track; where the track is wound around the front wheel and the rear wheel, and the motor drive mechanism is configured to drive the front wheel and the rear wheel to move synchronously, thereby driving the track to move, adopting the motor drive mechanism to drive the front wheel and the rear wheel to move synchronously, compared with the scheme in the prior art where the front wheel or the rear wheel is driven to move via the track, is configured to effectively reduce the load on the track, thereby avoiding fracture, improving its service life, increasing transmission efficiency to save costs, and improving the cleaning effectiveness of the underwater robot.

### BRIEF DESCRIPTION OF THE DRAWINGS

To illustrate the technical solutions in the embodiments of the present invention or the prior art more clearly, the accompanying drawings required for describing the embodiments or the prior art are briefly introduced below. Obviously, the accompanying drawings in the following description show merely some embodiments of the present invention. For a person skilled in the art, other accompanying drawings can be obtained based on the structures illustrated in these accompanying drawings without any creative effort.
FIG. 1 is a schematic perspective structural view of a preferred embodiment of the underwater robot drive structure of the present invention;
FIG. 2 is a schematic side view of a preferred embodiment of the underwater robot drive structure of the present invention;
FIG. 3 is a schematic perspective structural view of the underwater robot of the present invention;
FIG. 4 is a schematic cross-sectional view of the underwater robot of the present invention.

### Reference Numerals:

front wheel 1; rear wheel 2; track 3; motor 4; interconnecting gear 5; first gear 6; second gear 7; third gear 8; fourth gear 9; internal ring gear 10 of the front wheel 1; internal ring gear 11 of the rear wheel 2; roller brush intermediate gear 12; roller brush gear 13; pressure hull 14; debris bin 15; debris bin cover 16; paddle 17; roller brush 18.

The achievement of the objectives, functional features, and advantages of the present invention will be further described in conjunction with embodiments and with reference to the accompanying drawings.

### DETAILED DESCRIPTION

The technical solutions in the embodiments of the present invention are clearly and completely described below in conjunction with the accompanying drawings in the embodiments of the present invention. Obviously, the described embodiments are only a part of the embodiments of the present invention, and not all of them. All other embodiments obtained by a person skilled in the art based on the embodiments of the present invention without creative efforts shall fall within the scope of protection of the present invention.

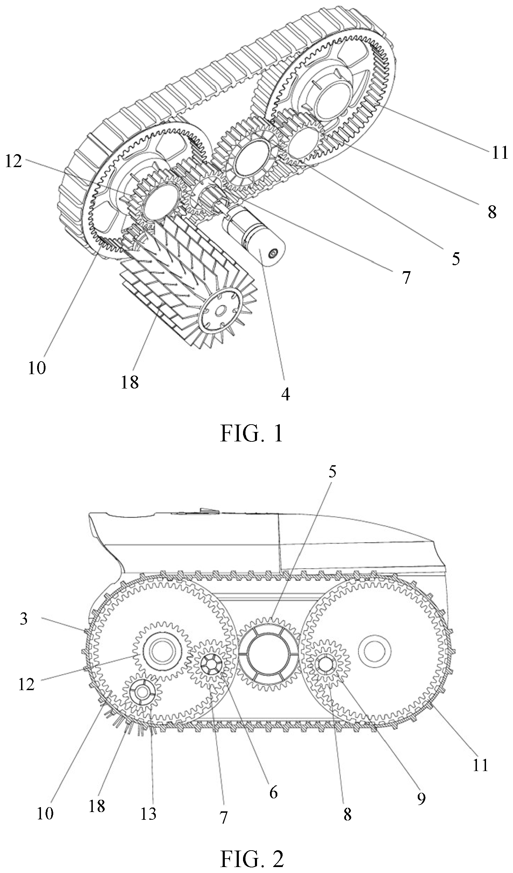

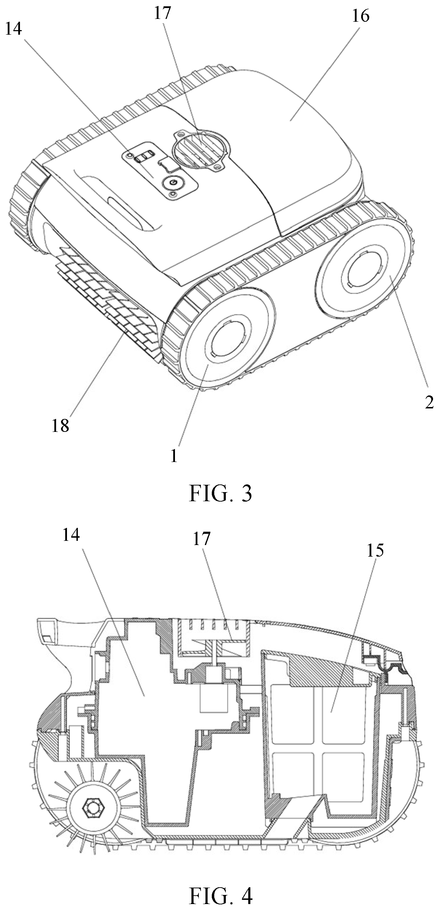

The present invention proposes an underwater robot drive structure. Please refer to FIGS. 1 to 4. A preferred embodiment of the underwater robot drive structure of the present invention includes a motor drive mechanism, a front wheel 1, a rear wheel 2, and a track 3. The track 3 is wound around the front wheel 1 and the rear wheel 2. The motor drive mechanism is configured to drive the front wheel 1 and the rear wheel 2 to move synchronously, thereby driving the track 3 to move, which realizes walking of the robot on a swimming pool floor.

In the present embodiment, the motor drive mechanism drives the front wheel 1 and the rear wheel 2 to move synchronously. Compared with the scheme in the prior art where the front wheel 1 or the rear wheel 2 is driven to move via the track 3, the present embodiment is configured to effectively reduce the load on the track 3, thereby avoiding fracture, improving its service life, increasing transmission efficiency to save costs, and improving the cleaning effectiveness of the underwater robot.

Furthermore, in the present embodiment, the motor drive mechanism includes a motor 4 and a gear transmission set. An output shaft of the motor 4 is connected to an input end of the gear transmission set. The gear transmission set is respectively meshed with the front wheel 1 and the rear wheel 2.

As an implementation solution, in the present embodiment, the gear transmission set includes a front gear transmission unit, a rear gear transmission unit, and an interconnecting gear 5. The front gear transmission unit includes a first gear 6 and a second gear 7 coaxially connected to the first gear 6. The rear gear transmission unit includes a third gear 8 and a fourth gear 9 coaxially connected to the third gear 8. The second gear 7 is connected to the output shaft of the motor 4. The interconnecting gear 5 is respectively meshed with the second gear 7 and the third gear 8. Each of the front wheel 1 and the rear wheel 2 is provided with an internal ring gear. The internal ring gear 10 of the front wheel 1 is meshed with the first gear 6. The internal ring gear 11 of the rear wheel 2 is meshed with the fourth gear 9.

Furthermore, in the present embodiment, the underwater robot drive structure further includes a roller brush drive gear set driven in conjunction with the second gear 7.

Specifically, in the present embodiment, the roller brush drive gear set includes a roller brush intermediate gear 12 and a roller brush gear 13. The roller brush intermediate gear 12 is meshed with the second gear 7. The roller brush gear 13 is meshed with the roller brush intermediate gear 12. The roller brush gear 13 is connected to a roller brush 18.

During operation, the first gear 6 drives the internal ring gear 10 of the front wheel 1 to rotate, thereby driving the front wheel 1 to rotate. The second gear 7 simultaneously drives the roller brush intermediate gear 12 and the interconnecting gear 5. The roller brush intermediate gear 12 drives the roller brush gear 13 to rotate. The interconnecting gear 5 drives the third gear 8 to rotate. The third gear 8 drives the internal ring gear 11 of the rear wheel 2 to rotate via the fourth gear 9, thereby driving the rear wheel 2 to rotate. The track 3 is meshed via teeth on outer circumferences of the front wheel 1 and the rear wheel 2. The rotation of the front wheel 1 and the rear wheel 2 synchronously drives the movement of the track 3, thereby realizing walking of the robot on the swimming pool floor.

The beneficial effects of the underwater robot drive structure of the present invention are as follows:

With the above technical solution of the present invention, including: a motor drive mechanism, a front wheel 1, a rear wheel 2, and a track 3; where the track 3 is wound around the front wheel 1 and the rear wheel 2, and the motor drive mechanism is configured to drive the front wheel 1 and the rear wheel 2 to move synchronously, thereby driving the track 3 to move, adopting the motor drive mechanism to drive the front wheel 1 and the rear wheel 2 to move synchronously, compared with the scheme in the prior art where the front wheel 1 or the rear wheel 2 is driven to move via the track 3, is configured to effectively reduce the load on the track 3, thereby avoiding fracture, improving its service life, increasing transmission efficiency to save costs, and improving the cleaning effectiveness of the underwater robot.

To achieve the aforementioned objective, the present invention further proposes an underwater robot. Please refer again to FIGS. 1 to 4. The underwater robot includes the underwater robot drive structure described above. The structure and working principle of the underwater robot drive structure have been described in detail above and will not be repeated here.

Furthermore, in the present embodiment, the underwater robot further includes a pressure hull 14, a debris bin 15, and a debris bin cover 16. The debris bin 15 is disposed at a rear end of the pressure hull 14. The debris bin cover 16 covers an upper end of the debris bin 15. The debris bin 15 is configured to collect debris from the bottom of a swimming pool.

Furthermore, in the present embodiment, the underwater robot further includes a paddle 17 disposed on a top of the pressure hull 14. The paddle 17 is configured to discharge clean water that has passed through.

Furthermore, in the present embodiment, the underwater robot further includes a switch button, a charging socket, and an indicator light disposed on the pressure hull 14.

Furthermore, in the present embodiment, the underwater robot further includes a printed circuit board, PCB, disposed inside the pressure hull 14, and the switch button, the charging socket, and the indicator light are electrically connected to the PCB.

The beneficial effects of the underwater robot of the present invention are as follows:

With the above technical solution of the present invention, including: a motor drive mechanism, a front wheel 1, a rear wheel 2, and a track 3; where the track 3 is wound around the front wheel 1 and the rear wheel 2, and the motor drive mechanism is configured to drive the front wheel 1 and the rear wheel 2 to move synchronously, thereby driving the track 3 to move, adopting the motor drive mechanism to drive the front wheel 1 and the rear wheel 2 to move synchronously, compared with the scheme in the prior art where the front wheel 1 or the rear wheel 2 is driven to move via the track 3, is configured to effectively reduce the load on the track 3, thereby avoiding fracture, improving its service life, increasing transmission efficiency to save costs, and improving the cleaning effectiveness of the underwater robot.

The above descriptions are only preferred embodiments of the present invention and are not intended to limit the patent scope of the present invention. Any equivalent structural transformations made under the concept of the present invention by utilizing the content of the description and the accompanying drawings of the present invention, or any direct/indirect application in other related technical fields, are included within the patent protection scope of the present invention.

## Claims

1. An underwater robot drive structure, comprising: a motor drive mechanism, a front wheel, a rear wheel, and a track; wherein the track is wound around the front wheel and the rear wheel, and the motor drive mechanism is configured to drive the front wheel and the rear wheel to move synchronously, thereby driving the track to move.

2. The underwater robot drive structure according to claim 1, wherein the motor drive mechanism comprises a motor and a gear transmission set; an output shaft of the motor is connected to an input end of the gear transmission set; and the gear transmission set is respectively meshed with the front wheel and the rear wheel.

3. The underwater robot drive structure according to claim 2, wherein the gear transmission set comprises a front gear transmission unit, a rear gear transmission unit, and an interconnecting gear; the front gear transmission unit comprises a first gear and a second gear coaxially connected to the first gear; the rear gear transmission unit comprises a third gear and a fourth gear coaxially connected to the third gear; the second gear is connected to the output shaft of the motor; the interconnecting gear is respectively meshed with the second gear and the third gear; each of the front wheel and the rear wheel is provided with an internal ring gear; an internal ring gear of the front wheel is meshed with the first gear; and an internal ring gear of the rear wheel is meshed with the fourth gear.

4. The underwater robot drive structure according to claim 3, wherein the underwater robot drive structure further comprises a roller brush drive gear set driven in conjunction with the second gear.

5. The underwater robot drive structure according to claim 4, wherein the roller brush drive gear set comprises a roller brush intermediate gear and a roller brush gear; the roller brush intermediate gear is meshed with the second gear; the roller brush gear is meshed with the roller brush intermediate gear; and the roller brush gear is connected to a roller brush.

6. An underwater robot, wherein the underwater robot comprises the underwater robot drive structure according to any one of claims 1 to 5.

7. The underwater robot according to claim 6, wherein the underwater robot further comprises a pressure hull, a debris bin, and a debris bin cover; the debris bin is disposed at a rear end of the pressure hull; and the debris bin cover covers an upper end of the debris bin.

8. The underwater robot according to claim 7, wherein the underwater robot further comprises a paddle disposed on a top of the pressure hull.

9. The underwater robot according to claim 7, wherein the underwater robot further comprises a switch button, a charging socket, and an indicator light disposed on the pressure hull.

10. The underwater robot according to claim 9, wherein the underwater robot further comprises a printed circuit board, PCB, disposed inside the pressure hull, and the switch button, the charging socket, and the indicator light are electrically connected to the PCB.
